# EUROPEAN PATENT SPECIFICATION

(11) **EP 1 842 419 B1**
(45) Date of publication and mention of the grant of the patent: **29.06.2011**
(21) Application number: 07075262.1
(22) Date of filing: 05.04.2007
(51) Int. Cl.: A01G 9/02, B29C 45/37

(54) **Plastic pot with material-saving wall construction**
Kunststofftopf mit materialsparender Wand
Pot de fleur en plastique avec un agencement de paroi permettant d'économiser les materiaux

(30) Priority: 07.04.2006 NL 1031540
(43) Date of publication of application: 10.10.2007
(60) Divisional application: 10192063.5
(73) Proprietor: Handelsonderneming Van Krimpen B.V., 4731 CZ Oudenbosch (NL)
(72) Inventor: Wilschut, Maarten Jacob, 4731 CZ Oudenbosch (NL)
(74) Representative: Grootscholten, Johannes A.M.

(56) References cited:
- WO-A1-02/096187
- DE-A1- 19 801 141
- DE-B1- 2 118 841
- FR-A- 2 370 569
- JP-A- 9 000 074
- US-A1- 2003 233 787

## Description

The invention relates to a plastic pot in accordance with the preamble of claim 1 and a mould for producing such a pot.

Such pots are generally known and, as flowerpot, are for instance used for cultivating plants therein. The document WO 2002/096187 discloses a plastic pot as in the preamble of claim 1

In this application the pot is sold with the plant cultivated therein. The pot is discarded by the end user as waste. Such pots are therefore intended in principle for once-only use.

It is therefore important to produce plastic pots of the present type at the lowest possible cost price. This is achieved according to the invention with the features of claim 1 as a whole. It is hereby possible to manufacture the wall with less material than in usual similar pots.

A significant problem in reducing the wall thickness of pots manufactured by injection moulding is that during the injection moulding the plastic material penetrates only at a very high pressure into the whole of the mould cavity of the mould used here. Owing to this high pressure the core of the mould can be pressed slightly out of its axial position, with the result that the wall thickness on one side of the pot becomes greater than on the opposite side, wherein the thus created minimum wall thickness is too small to still enable use of the pot.

In the known art a nominal wall thickness is thus employed at which the core of the mould can be held in the desired axial position.

Owing to the invention the plastic material flows in fluid form into the mould cavity in properly uniform manner between the wider portions which are defined between the channels, and which define a greater wall thickness than at the position of the channels, i.e. at least the nominal wall thickness. The pressure of the fluid material hereby remains within limited bounds, and the core is not pressed askew. It is thus possible to manufacture a plastic pot of the present type by injection moulding with a material-saving in the order of magnitude of as much as 20%. In view of the far-reaching extent to which the pots of the present type have been developed, this is an exceptionally large saving.

The channels are suitably formed lying mutually adjacently and at least almost connecting. A maximum saving is achieved In this way.

According to a further development, the plastic pot according to the invention comprises a wall which consists of a number of mutually connecting sections substantially parallel to the base. The section furthest removed from the base forms for instance the per se known pot rim.

Channels are preferably formed in at least one of the sections in such a pot. This can for instance be the section connecting directly onto the base. The other section or sections have a relatively limited height and in the mould adjoin the foot of the core, so that pressing askew of the core by high pressure will not occur in this area.

These sections furthest removed from the base can then be moulded in reliable manner with a small wall thickness. Strengthening edges or ribs will of course be applied in order to impart sufficient rigidity to the pot.

It is also possible to provide all sections of the pot wall with channels. These channels, or rather the parts lying there between, form stiffening ribs which impart the desired stiffness to the wall.

In a pot of average size, for instance a pot of 12 cm, the wall thickness between the channels can amount substantially to 0.5 mm. The wall thickness in the channels can here favourably amount substantially to 0.3 mm.

If in a preferred embodiment the channels are formed only on the inner side of the pot, they are hardly visible on the outside. The appearance of the pot then differs hardly at all from that of a standard pot.

The invention likewise relates to and provides a mould for injection moulding of a pot according to the invention which comprises a first mould part with a mould cavity defining the outer side of the pot, a second mould part with a core defining the inner side of the pot, at least one gate opening at the position of a wall part of the mould cavity or the core defining the base, and wherein the core carries on its surface defining the inner wall of the pot a number of ridges distributed uniformly over the periphery thereof. These ridges form the channels during injection moulding of the pot for forming a pot in accordance with the present invention.

The ridges are preferably defined between grooves arranged in the core. These grooves can have a part-circular profile in that they are arranged in the wall of the core with for instance a plain milling cutter or the like.
Figure 2 shows a perspective view at an angle from below of the pot of figure 1.
Figure 3 shows a partial section through the wall of the pot of figures 1 and 2.
Figure 4 shows a view corresponding with Figure 2 of another embodiment of the pot according to the invention.
Figure 5 shows a perspective view from above of the pot of Figure 4.

The pot 1 shown in the figures has the form of a per se known plastic flowerpot for cultivating plants. Pot 1 comprises a base 2 and a wall 3 extending from the edge thereof.

Pot wall 3 ends in a pot rim 9.

In the exemplary embodiment shown here pot wall 3 consists of three sections 4, 5 and 6. Upper section 6 forms a per se known, substantially cylindrical flange of the pot.

Base 2 of pot 1 is provided in the usual manner with drainage openings 7 and border strips 8 which can support the pot on a surface, wherein base 2 is located a short distance from this surface.

On the inner side of pot 1 wall 3 is provided with a number of channels 10 arranged distributed over the periphery and extending in the direction from the edge of base 2 to pot rim 9. The wall thickness at the position of these channels 10 is very limited so that the total use of material for the wall of the pot is considerably lower than for a pot with a continuous wall thickness which, because of the described problem with the mould core being pressed askew, cannot be smaller than the wall thickness at the position of portions 11 between channels 10.

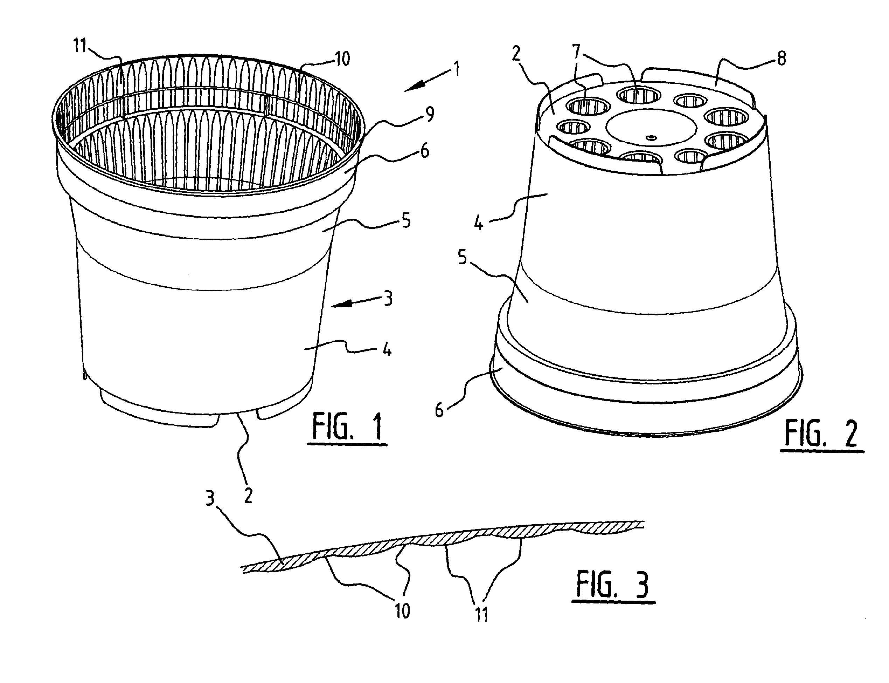

As shown particularly in figure 1, channels 10 are formed lying mutually adjacently and at least almost connecting in inner wall 3.

In the exemplary embodiment shown here the portions 11 between channels 10 have a part-circular boundary surface which is obtained in that corresponding grooves are cut or arranged in a like manner in the wall of the core of the mould with which the pot is manufactured.

In the embodiment shown here the wall thickness between the channels at the position of reference numeral 11 is substantially 0.5 mm, while that of the channels amounts substantially to 0.3 mm. A material-saving is thus achieved in the order of magnitude of 20%, while the appearance of the pot and the utility, i.e. the rigidity and the like, are essentially not adversely affected.

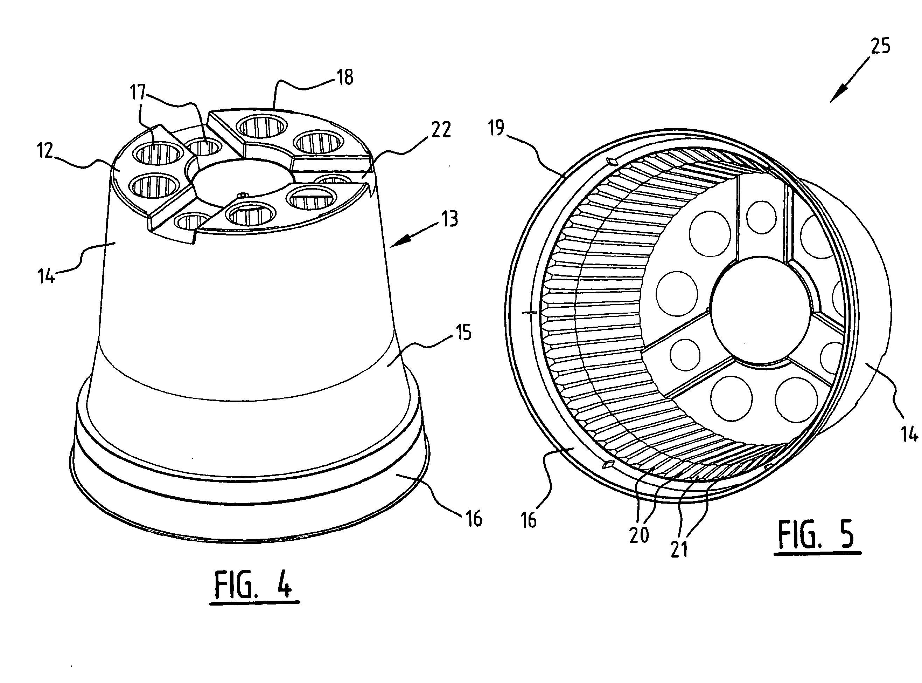

In Figures 4 and 5 the elements corresponding with those shown in Figures 1 and 2 are designated with reference numeral increased by 10 relative to these corresponding elements.

Pot 25 of Figures 4 and 5 has a differently formed base 12. This base 12 is provided with three recessed portions 22 which impart a greater stiffness to base 12, whereby the wall thickness of the base can, if desired, also be small.

In this embodiment the section 16 of the pot rim is further free of the channels on the inner side so that, when a plant is placed in the pot, it is not possible to discern from the pot rim protruding above the potting compost that the pot according to this embodiment is embodied differently from the usual pots.

It will be apparent that the mould according to the invention has a core which defines the inner surface of pot 1 and which carries on its surface defining the inner wall of the pot a number of ridges arranged uniformly over the periphery thereof. These ridges form channels 10.

These ridges are formed in the wall of the core between grooves which are arranged in this wall and which preferably have a part-circular profile as already elucidated with reference to figure 3.

The invention is not limited to the only embodiment shown in the figures, but can be applied for any plastic pot where it is desired to achieve a very small effective wall thickness with a great uniformity over the periphery of the pot. A high-quality product can thus be formed with a minimum use of material.

## Claims

1. Plastic pot (1), such as a flowerpot, comprising a base (2) and a wall (3) manufactured from a curing material in a moulding process such as injection-moulding, the wall extending from the bottom edge of the base and ending in a pot rim, wherein the wall has a number of channels (10) arranged distributed over the periphery and extending in the direction from the bottom edge to the pot rim,
**characterized in that**
a nominal wall thickness of the wall (2) is defined by the moulding process, the wall thickness between the channels being at least equal to nominal, wherein the nominal wall thickness is such that, during production, skewing of an inner mould part is prevented, and the wall thickness at the channels is less than nominal.

2. Plastic pot as claimed in claim 1, wherein the channels (10) are formed lying mutually adjacently and at least almost connecting.

3. Plastic pot as claimed in claim 1 or 2, wherein the wall comprises a number of mutually connecting sections substantially parallel to the base, and the channels (10) are formed in at least one of the sections.

4. Plastic pot as claimed in any of the foregoing claims, wherein the wall thickness between the channels amounts substantially to 0.5 mm.

5. Plastic pot as claimed in any of the foregoing claims, wherein the wall thickness in the channels (10) amounts substantially to 0.3 mm.

6. Plastic pot as claimed in any of the foregoing claims, wherein the channels (10) are formed on the inner side of the pot.

7. Plastic pot as claimed in any of the foregoing claims, wherein the wall between two adjacent channels has in cross-section a part-circular boundary surface.

8. Mould for injection moulding of a pot as claimed in any of the foregoing claims, comprising a first mould part with a mould cavity defining the outer side of the pot, a second mould part with a core defining the inner side of the pot, at least one gate opening at the position of a wall part of the mould cavity or the core defining the base, wherein the core carries on its surface defining the inner wall of the pot a number of ridges distributed uniformly over the periphery thereof, for forming channels (10) in the pot as defined in claim 1.

9. Mould as claimed in claim 8, wherein the ridges are formed between grooves arranged in the core.

10. Mould as claimed in claim 9, wherein the grooves have a part-circular profile.

## Patentansprüche

1. Kunststofftopf (1), wie zum Beispiel ein Blumentopf, der eine Basis (2) und eine Wand (3) aufweist, die aus einem aushärtenden Material in einem Formungsvorgang wie zum Beispiel Spritzgießen hergestellt sind, wobei sich die Wand sich von der Bodenkante der Basis erstreckt und in einem Topfrand endet, wobei die Wand eine Anzahl von Kanälen (10) hat, die über den Umfang verteilt angeordnet sind und sich in der Richtung von der Bodenkante zum Topfrand erstrecken,
**dadurch gekennzeichnet, dass**
eine nominelle Wanddicke der Wand (2) durch den Formungsvorgang bestimmt wird, wobei die Wanddicke zwischen den Kanälen wenigstens gleich der nominellen ist, wobei die nominelle Wanddicke so ist, dass während der Herstellung Schiefstellung eines inneren Formteils verhindert wird, und die Wanddicke bei den Kanälen geringer ist als nominell.

2. Kunststofftopf nach Anspruch 1, bei dem die Kanäle (10) so ausgebildet sind, dass sie einander benachbart und wenigstens fast verbindend liegen.

3. Kunststofftopf nach Anspruch 1 oder 2, bei dem die Wand eine Anzahl von sich gegenseitig verbindenden Abschnitten aufweist, die im Wesentlichen parallel zur Basis sind, und die Kanäle (10) in wenigstens einem der Abschnitte ausgebildet sind.

4. Kunststofftopf nach einem der vorangehenden Ansprüche, bei dem die Wanddicke zwischen den Kanälen im Wesentlichen 0,5 mm beträgt.

5. Kunststofftopf nach einem der vorangehenden Ansprüche, bei dem die Wanddicke der Kanäle (10) im Wesentlichen 0,3 mm beträgt.

6. Kunststofftopf nach einem der vorangehenden Ansprüche, bei dem die Kanäle (10) an der Innenseite des Topfes ausgebildet sind.

7. Kunststofftopf nach einem der vorangehenden Ansprüche, bei dem die Wand zwischen zwei benachbarten Kanälen im Querschnitt eine teilweise kreisförmige Grenzfläche hat.

8. Form für Spritzgießen eines Topfes nach einem der vorangehenden Ansprüche, die einen ersten Formteil mit einem Formhohlraum, der die Außenseite des Topfes bestimmt, einen zweiten Formteil mit einem Kern, der die Innenseite des Topfes bestimmt, wenigstens eine Gatteröffnung an der Stelle eines Wandteils des Formhohlraums oder des Kerns, die die Basis bestimmt, aufweist, wobei der Kern an seiner Oberfläche, die die Innenwand des Topfes bestimmt, eine Anzahl von Rippen aufweist, die gleichförmig über ihren Umfang verteilt sind, um Kanäle (10) im Topf zu bilden, wie sie in Anspruch 1 definiert sind.

9. Form nach Anspruch 8, bei der die Rippen zwischen Nuten angeordnet sind, die in dem Kern angeordnet sind.

10. Form nach Anspruch 9, bei der die Nuten ein teilweise kreisförmiges Profil haben.

## Revendications

1. Pot en matière plastique (1), tel qu'un pot de fleurs, comprenant une base (2) et une paroi (3) fabriquées en matériau durcissant par un procédé de moulage, tel qu'un procédé de moulage par injection, la paroi s'étendant du bord inférieur de la base et se terminant par un rebord du pot, dans lequel la paroi présente un certain nombre de canaux (10) aménagés répartis sur la périphérie et s'étendant dans la direction du bord inférieur au rebord du pot,
**caractérisé en ce que**
une épaisseur de paroi théorique de la paroi (2) est définie par le procédé de moulage, l'épaisseur de paroi entre les canaux étant au moins égale à la l'épaisseur théorique, dans lequel l'épaisseur de paroi théorique est telle que, pendant la production, une partie de moule interne ne puisse pas se mettre de travers et que l'épaisseur de paroi au niveau des canaux soit inférieure à l'épaisseur théorique.

2. Pot en matière plastique selon la revendication 1, dans lequel les canaux (10) sont formés de manière à être mutuellement adjacents et à se raccorder au moins presque.

3. Pot en matière plastique selon la revendication 1 ou 2, dans lequel la paroi comprend un certain nombre de sections se raccordant mutuellement et sensiblement parallèles à la base, et les canaux (10) sont formés dans au moins l'une des sections.

4. Pot en matière plastique selon l'une quelconque des revendications précédentes, dans lequel l'épaisseur de paroi entre les canaux est sensiblement de 0,5 mm.

5. Pot en matière plastique selon l'une quelconque des revendications précédentes, dans lequel l'épaisseur de paroi dans les canaux (10) est sensiblement de 0,3 mm.

6. Pot en matière plastique selon l'une quelconque des revendications précédentes, dans lequel les canaux (10) sont formés sur le côté intérieur du pot.

7. Pot en matière plastique selon l'une quelconque des revendications précédentes, dans lequel la paroi entre deux canaux adjacents a, en section transversale, une surface de démarcation partiellement circulaire.

8. Moule pour moulage par injection d'un pot selon l'une quelconque des revendications précédentes, comprenant une première partie de moule avec une cavité de moule définissant le côté extérieur du pot, une seconde partie de moule avec un noyau définissant le côté intérieur du pot, au moins un orifice débouchant dans la position d'une partie de paroi de la cavité du moule ou du noyau définissant la base, dans lequel le noyau porte, sur sa surface définissant la paroi intérieure du pot, un certain nombre de nervures réparties uniformément sur sa périphérie, pour former des canaux (10) dans le pot comme défini dans la revendication 1.

9. Moule selon la revendication 8, dans lequel les nervures sont formées entre des rainures ménagées dans le noyau.

10. Moule selon la revendication 9, dans lequel les rainures ont un profil partiellement circulaire.
